# EUROPEAN PATENT APPLICATION

(11) **EP 4 664 061 A2**
(43) Date of publication of application: **17.12.2025**
(21) Application number: 24781265.4
(22) Date of filing: 28.03.2024
(51) Int. Cl.: G01B 11/06, G01N 21/84, G06Q 50/04, H01M 10/48, H01M 10/04, G01N 21/88

(54) **MONITORING DEVICE AND OPERATION METHOD THEREFOR**

(30) Priority: 28.03.2023 KR 20230040805
(71) Applicant: LG Energy Solution, Ltd., Seoul 07335 (KR)
(72) Inventor: EOM, Dong Hwan, Daejeon 34122 (KR); LEE, Jong Han, Daejeon 34122 (KR); HONG, Seung Gyun, Daejeon 34122 (KR); KIM, Min Ji, Daejeon 34122 (KR)
(74) Representative: BCKIP Part mbB
(86) International application number: PCT/KR2024/003975
(87) International publication number: WO 2024/205275

(57) **Abstract**

A monitoring device according to one embodiment disclosed herein may include a communication circuit, a processor, and a memory configured to store instructions, wherein, when executed by the processor, the instructions allow the monitoring device to acquire an image of a jelly roll including a positive electrode, a separator, and a negative electrode through the communication circuit, detect starting points of the positive electrode and the negative electrode from the image, and calculate input amounts of the positive electrode and the negative electrode included in the jelly roll based on the starting points.

## Description

### [Technical Field]

### CROSS-REFERENCE TO RELATED APPLICATION

This application claims priority to and the benefit of Korean Patent Application No.10-2023-0040805 filed in the Korean Intellectual Property Office on March 28, 2022, the entire contents of which are incorporated herein by reference.

### TECHNICAL FIELD

Embodiments disclosed herein relate to a monitoring device and a method of operating the same.

### [Background Art]

Recently, research and development on secondary batteries has been actively conducted. Here, the secondary battery is a battery capable of charging and discharging and includes all recent lithium ion batteries such as conventional Ni/Cd batteries and Ni/MH batteries. Among secondary batteries, lithium-ion batteries have an advantage of having a much higher energy density than conventional Ni/Cd batteries, Ni/MH batteries, and the like. In addition, the lithium-ion batteries may be manufactured in a compact and lightweight form, and thus are used as a power source for a mobile device. In addition, the lithium-ion batteries are attracting attention as a next-generation energy storage medium as a range of use expands to a power source for an electric vehicle.

The secondary batteries may generally be used as a battery pack including a battery module in which a plurality of battery cells are connected in series and/or parallel. In addition, the secondary batteries may be used as a battery rack including a plurality of battery modules and a rack frame accommodating the battery modules.

Here, the battery cell may be manufactured by accommodating an electrode assembly in a battery case and injecting an electrolyte solution into the battery case. The battery cell is classified into cylindrical, prismatic, and pouch types according to the type of the battery case, and the cylindrical battery cell may include an electrode assembly, a battery case of a cylindrical metal can that accommodates the electrode assembly and an electrolyte solution, and a cap assembly assembled above the cylindrical can.

In the manufacture of such cylindrical battery cells, the input amount of a jelly roll around which a positive electrode, a separator, and a negative electrode are wound may be an important factor in determining whether a battery cell fails.

### [Disclosure]

### [Technical Problem]

A camera module may be used to check whether a jelly roll fails. However, due to interference with a separator and poor initial visibility of a positive electrode and a negative electrode, many resources may be consumed to accurately measure the input amount of the positive and negative electrodes. Therefore, there may be a need for a method of reducing the resources consumed in identifying the amount of jelly rolls by minimizing a user's input.

The objects of embodiments disclosed herein are not limited to the above-described objects, and other objects that are not mentioned will be able to be clearly understood by those skilled in the art from the following descriptions.

### [Technical Solution]

A monitoring device according to one embodiment disclosed herein may include a communication circuit, a processor, and a memory configured to store instructions, wherein, when executed by the processor, the instructions allow the monitoring device to acquire an image of a jelly roll including a positive electrode, a separator, and a negative electrode through the communication circuit, detect starting points of the positive electrode and the negative electrode from the image, and calculate input amounts of the positive electrode and the negative electrode included in the jelly roll based on the starting points.

A method of operating a monitoring device according to one embodiment disclosed herein may include an operation of acquiring an image of a jelly roll including a positive electrode, a separator, and a negative electrode, an operation of detecting starting points of the positive electrode and the negative electrode from the image, and an operation of calculating input amounts of the positive electrode and the negative electrode included in the jelly roll based on the starting points.

### [Advantageous Effects]

According to the monitoring device and the method of operating the same according to various embodiments disclosed herein, it is possible to check the input amount of a jelly roll through a jelly roll image.

The effects of the monitoring device and the method of operating the same according to the disclosure of the present document are not limited to the above-described effects, and other effects that are not mentioned will be able to be clearly understood by those skilled in the art according to the disclosure of the present document.

### [Description of Drawings]

FIG. 1 is a block diagram of a monitoring device according to one embodiment of the present disclosure.
FIG. 2 shows a jelly roll image according to one embodiment of the present disclosure.
FIG. 3 shows an image processing the jelly roll image according to one embodiment of the present disclosure.
FIG. 4 is a flowchart showing a method of operating the monitoring device according to one embodiment of the present disclosure.

In the description of the drawings, the same or similar reference numerals may be used for the same or similar components.

### [Mode for Invention]

Hereinafter, embodiments of the present invention will be described with reference to the accompanying drawings. However, it should be understood that this is not intended to limit the present invention to specific embodiments and includes various modifications, equivalents, and/or alternatives of the embodiments of the present invention.

It should be understood that the embodiments of the present document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. Terms such as "first," "second," "first," "second," "A," "B," "(a)," or "(b)" may simply be used to distinguish the corresponding component from another and do not limit the corresponding components in another aspect (e.g., importance or order).

When a certain component (e.g., a first component) is described as being "coupled," "connected," or "joined" to another component (e.g., a second component) with or without the terms "functionally" or "communicatively" or "coupled" or "connected," this means that the certain component may be connected to another component directly (e.g., by wire or wirelessly) or indirectly (e.g., through a third component).

A method according to various embodiments disclosed herein may be provided to be included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through application stores or directly online between two user devices. In the case of the online distribution, at least some of the computer program products may be at least temporarily stored or temporarily generated in a device-readable storage medium such as a memory of a server of a manufacturer, a server of an application store, or a relay server.

According to the embodiments disclosed herein, each component (e.g., a module or a program) of the above-described components may include a single object or a plurality of objects, and some of the plurality of objects may be separately disposed in another component. According to the embodiments disclosed herein, one or more components or operations among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to the embodiments disclosed herein, operations performed by modules, programs, or other components may be executed sequentially, in parallel, repeatedly, or heuristically, or one or more of the operations may be executed in a different order or omitted, or one or more other operations may be added.

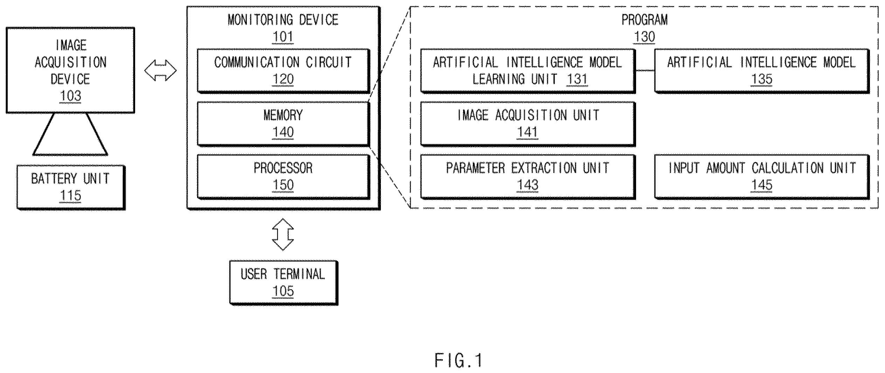

Referring to FIG. 1, the monitoring device 101 may include a communication circuit 120, a memory 140, and a processor 150. According to the embodiment, the monitoring device 101 illustrated in FIG. 1 may further include at least one component (e.g., a display, an input device, or an output device) other than the components illustrated in FIG. 1.

In one embodiment, the communication circuit 120 may establish a wired communication channel and/or a wireless communication channel between the monitoring device 101 and an image acquisition device 103 and/or a user terminal 105 and transmit and receive data with the image acquisition device 103 and/or the user terminal 105 through the established communication channel. In one embodiment, the communication circuit 120 may acquire an image of a battery unit 115 from the image acquisition device 103. In one embodiment, the battery unit 115 may be a jelly roll around which a positive electrode, a separator, a negative electrode, and a separator are wound.

In one embodiment, the memory 140 may include a volatile memory and/or a non-volatile memory.

In one embodiment, the memory 140 may store data used by at least one component (e.g., the processor 150) of the monitoring device 101. For example, the data may include a program 130 (or an instruction related thereto), input data, or output data. In one embodiment, the instruction may allow the monitoring device 101 to perform operations defined by the instruction when executed by the processor 150.

In one embodiment, the memory 140 may include the program 130 (e.g., an artificial intelligence model learning unit 131, an artificial intelligence model 135, an image acquisition unit 141, a parameter extraction unit 143, and an input amount calculation unit 145).

In one embodiment, the processor 150 may include a central processing unit, an application processor, a graphics processing unit, a neural processing unit (NPU), an image signal processor, a sensor hub processor, or a communication processor.

In one embodiment, the processor 150 may control at least one another component (e.g., hardware or software component) of the monitoring device 101 connected to the processor 150 by executing the program 130 (e.g., the artificial intelligence model learning unit 131, the artificial intelligence model 135, the image acquisition unit 141, the parameter extraction unit 143, and the input amount calculation unit 145) and perform various data processing or calculation.

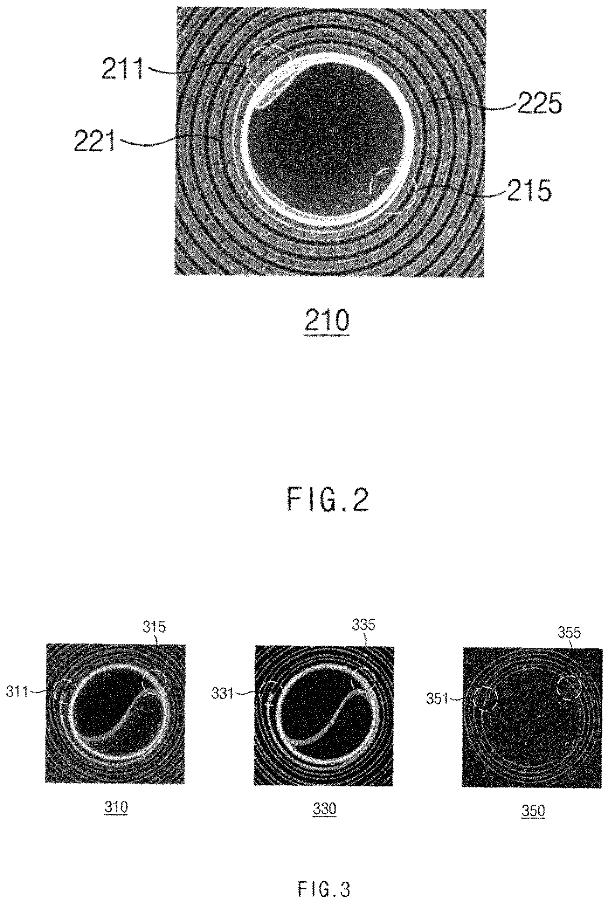

Hereinafter, a method of allowing the monitoring device 101 to determine the input amounts of positive and negative electrodes through the artificial intelligence model learning unit 131, the artificial intelligence model 135, the image acquisition unit 141, the parameter extraction unit 143, and the input amount calculation unit 145 will be described in detail with reference to FIGS. 2 and 3.

### Learning of artificial intelligence model

In one embodiment, the artificial intelligence model learning unit 131 may learn the artificial intelligence model 135 based on an already acquired image 210 of the jelly roll. The image 210 may be an image for classifying at least starting points 211 and 215 of the positive and negative electrodes included in the jelly roll. In addition, the image 210 may be an image for classifying at least areas 221 and 225 of the positive and negative electrodes included in the jelly roll.

In one embodiment, the artificial intelligence model 135 may be a model capable of feature point extraction. In one embodiment, the artificial intelligence model 135 may be learned to extract designated feature points based on the previously acquired image 210 of the jelly roll. In one embodiment, the artificial intelligence model 135 may be learned to extract the starting points 211 and 215 of the positive and negative electrodes based on the image 210. In one embodiment, the artificial intelligence model 135 may be learned to extract the areas 221 and 225 of the positive and negative electrodes based on the image 210. In another embodiment, the artificial intelligence model 135 may be learned to extract the positive electrode, a separator, the negative electrode, and the separator that are included in the jelly roll based on the image 210.

In one embodiment, the artificial intelligence model 135 may include an input layer, a hidden layer, and an output layer. Here, the input layer may receive the previously acquired images of the jelly roll. The hidden layer may have a structure in which a plurality of layers are connected sequentially. The output layer may be a layer for outputting information (e.g., a location and an area) about the feature points included in the images.

In one embodiment, the artificial intelligence model learning unit 141 may adjust parameters of the hidden layer so that the pre-classification result of the information about the acquired feature points and the image 210 match or is a reference difference value or less by inputting the image 210 into the artificial intelligence model 135. Here, the pre-classification result may indicate information about feature points previously tagged by a manager with respect to the previously acquired image 210 of the jelly roll. For example, the pre-classification result may include information about the starting points 211 and 215 of the positive and negative electrodes, and/or information about areas 221 and 225 of the positive and negative electrodes.

Determination of the input amount of positive and negative electrodes.

In one embodiment, the image acquisition unit 141 may acquire the image of the battery unit 115 from the image acquisition device 103. In one embodiment, the image acquisition unit 141 may acquire the image of the battery unit 115 from the image acquisition device 103 through the communication circuit 120. Here, the battery unit 115 may be the jelly roll around which the positive electrode, the separator, the negative electrode, and the separator are wound. Hereinafter, the image of the battery unit 115 may be referred to as a jelly roll image.

In one embodiment, the parameter extraction unit 143 may acquire parameters related to the jelly roll from a jelly roll image 310. Here, the parameters related to the jelly roll may be related to the starting points of the electrodes, the areas of the electrodes, and/or the thicknesses of the electrodes.

In one embodiment, the parameter extraction unit 143 may input the jelly roll image 310 into the artificial intelligence model 135 to acquire the parameters related to the jelly roll from the jelly roll image 310. Hereinafter, an example in which the parameter extraction unit 143 acquires the parameters for the starting points 311 and 315 of the electrodes by inputting the jelly roll image 310 into the artificial intelligence model 135 will be described.

In one embodiment, the parameter extraction unit 143 may apply a specified image processing algorithm to the jelly roll image 310 to additionally acquire the parameters related to the jelly roll from the jelly roll image 310. For example, the specified image processing algorithm may include a noise filtering algorithm, and a distance map extraction algorithm.

In one embodiment, referring to FIG. 3, the parameter extraction unit 143 may generate a jelly roll image 330 by applying the noise filtering algorithm to the jelly roll image 310. Comparing the jelly roll image 310 with the jelly roll image 330, it can be seen that noises included in areas between outlines of the jelly roll image 310 has been removed from the jelly roll image 330. The outlines identified from the jelly roll image 310 and the jelly roll image 330 may indicate a separator. Therefore, the areas between the outlines of the jelly roll image 310 and the jelly roll image 330 may indicate a positive electrode or a negative electrode.

In one embodiment, the parameter extraction unit 143 may extract two areas separated by separators from the jelly roll image 310 (or the jelly roll image 330). In one embodiment, the parameter extraction unit 143 may extract parameters from each of two areas.

In one embodiment, the parameter extraction unit 143 may extract thickness information of each of the two areas. For example, the parameter extraction unit 143 may extract the minimum thickness, maximum thickness, and average thickness of each of the two areas. In one embodiment, the parameter extraction unit 143 may classify the two areas into a negative electrode area or a positive electrode area based on the thickness information. For example, the parameter extraction unit 143 may classify an area having a relatively great maximum thickness or average thickness among the two areas as a negative electrode area. For example, the parameter extraction unit 143 may classify an area having a relatively small maximum thickness or average thickness among the two areas as a positive electrode area.

In one embodiment, the parameter extraction unit 143 may determine a starting point of the area determined to be the positive electrode as the starting point of the positive electrode and determine a starting point of the area determined to be the negative electrode as the starting point of the negative electrode. In one embodiment, the parameter extraction unit 143 may determine starting points 315, 335, and 355 of the area determined to be the negative electrode as the starting point of the negative electrode. In one embodiment, the parameter extraction unit 143 may determine starting points 311, 331, and 351 of the area determined to be the positive electrode as the starting point of the positive electrode.

In one embodiment, the parameter extraction unit 143 may extract winding information of each of the two areas. In one embodiment, the parameter extraction unit 143 may extract a line segment in which the center points of the thickness of the negative electrode area in the jelly roll image 310 (or the jelly roll image 330) extend as a winding path of the negative electrode. In one embodiment, the parameter extraction unit 143 may extract a line segment in which the center points of the thickness of the positive electrode area in the jelly roll image 310 (or the jelly roll image 330) extend as a winding path of the positive electrode. In one embodiment, the parameter extraction unit 143 may generate a distance map 350 including only the winding path of the negative electrode and the winding path of the positive electrode.

In one embodiment, the input amount calculation unit 145 may calculate the positive electrode input amount and/or negative electrode input amount of the battery unit 115 based on the parameters of the jelly roll image extracted from the parameter extraction unit 143.

In one embodiment, the input amount calculation unit 145 may calculate a first winding length of the positive electrode extending from the starting point of the positive electrode area. In one embodiment, the first winding length may be a length of a first turn of the positive electrode extending from the starting point of the positive electrode area. Here, the first turn may indicate one rotation in the winding direction from the starting points 311, 331, and 351 of the positive electrode.

In one embodiment, the input amount calculation unit 145 may calculate a second winding length of the negative electrode extending from the starting point of the negative electrode area. In one embodiment, the second winding length may be a length of a first turn of the negative electrode extending from the starting point of the negative electrode area. Here, the first turn may indicate one rotation in the winding direction from the starting points 315, 335, and 355 of the negative electrode.

In one embodiment, the input amount calculation unit 145 may calculate the first winding length of the positive electrode and the second winding length of the negative electrode based on the distance map 350.

In one embodiment, the input amount calculation unit 145 may calculate the input amounts of the positive and negative electrodes included in the battery unit 115 based on the first winding length and the second winding length. Here, the input amount calculation unit 145 may calculate the input amounts of the positive electrode and negative electrode based on the information that the input amounts of the positive electrode and negative electrode are proportional to the winding length. In one embodiment, a proportionality constant between the input amount and the winding length may be determined in advance.

In addition, the input amount calculation unit 145 may compare the starting point of the positive electrode area and the starting point of the negative electrode area and determine whether the positive electrode and negative electrode are reversed. For example, when the starting point of the positive electrode area is earlier than the starting point of the negative electrode area, the input amount calculation unit 145 may determine that the positive electrode and negative electrode are reversed.

In one embodiment, the input amount calculation unit 145 may provide a notification to the user terminal 105 when the input amounts of the negative and positive electrodes wound around the battery unit 115 are not appropriate. In one embodiment, the input amount calculation unit 145 may provide a notification to the user terminal 105 when the negative and positive electrodes wound around the battery unit 115 are reversed.

In FIG. 1, although the monitoring device 101 and the image acquisition device 103 are illustrated as separate devices, this is only illustrative. According to the embodiment, the monitoring device 101 and the image acquisition device 103 may be implemented as the same one device.

In the above description with reference to FIGS. 1 to 3, the parameters acquired by being input into the artificial intelligence model 135 are limited to the starting points 311 and 315 of the electrodes, but it is only an example. Depending on the embodiment, the artificial intelligence model 135 may be pre-learned to further acquire information about not only the starting points of the electrodes, but also the areas of the electrodes, the thicknesses of the electrodes, and the winding paths of the electrodes based on the jelly roll image. In this case, the parameter extraction unit 143 may not perform the image processing algorithm required to further acquire additional information. In addition, the input amount calculation unit 145 may calculate the input amounts of the positive and negative electrodes included in the battery unit 115 based on information about the starting points of the electrodes and winding paths acquired through the artificial intelligence model 135. Lastly, the input amount calculation unit 145 may determine whether the positive and negative electrodes of the battery unit 115 are reversed based on information about the starting points of the electrodes acquired through the artificial intelligence model 135.

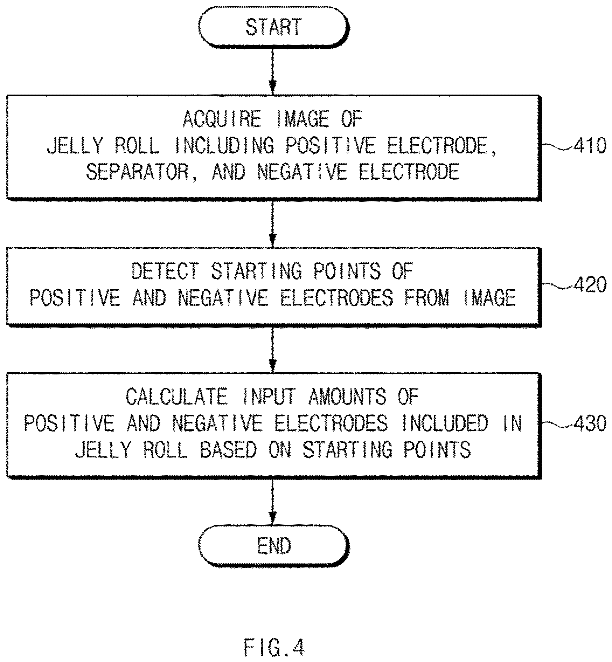

FIG. 4 is a flowchart showing a method of operating the monitoring device according to one embodiment of the present disclosure. FIG. 4 may be described with reference to FIGS. 1 to 3.

Referring to FIG. 4, in operation 410, the monitoring device 101 may acquire an image of a core of the jelly roll including the positive electrode, the separator, and the negative electrode. In one embodiment, the monitoring device 101 may acquire an image of the battery unit 115 from the image acquisition device 103 through the communication circuit 120. Here, the battery unit 115 may be the jelly roll around which the positive electrode, the separator, the negative electrode, and the separator are wound.

In operation 420, the monitoring device 101 may detect the starting points of the positive electrode and the negative electrode from the image. In one embodiment, the monitoring device 101 may detect the starting points 311 and 315 of the positive electrode and negative electrode by inputting the jelly roll image 310 into the artificial intelligence model 135.

In operation 430, the monitoring device 101 may calculate the input amounts of the positive and negative electrodes included in the jelly roll based on the starting points.

In one embodiment, the monitoring device 101 may calculate the first winding length of the positive electrode extending from the starting point of the positive electrode area. In one embodiment, the first winding length may be a length of a first turn of the positive electrode extending from the starting point of the positive electrode area. Here, the first turn may indicate one rotation in the winding direction from the starting points 311, 331, and 351 of the positive electrode.

In one embodiment, the monitoring device 101 may calculate the second winding length of the negative electrode extending from the starting point of the negative electrode area. In one embodiment, the second winding length may be a length of a first turn of the negative electrode extending from the starting point of the negative electrode area. Here, the first turn may indicate one rotation in the winding direction from the starting points 315, 335, and 355 of the negative electrode.

In one embodiment, the monitoring device 101 may calculate the second winding length of the positive electrode and the second winding length of the negative electrode based on the distance map 350. In one embodiment, the monitoring device 101 may calculate the input amounts of the positive and negative electrodes included in the battery unit 115 based on the first winding length and the second winding length.

Additionally, the monitoring device 101 may compare the starting point of the positive electrode area and the starting point of the negative electrode area and determine whether the positive electrode and negative electrode are reversed. For example, when the starting point of the positive electrode area is earlier than the starting point of the negative electrode area, the monitoring device 101 may determine that the positive electrode and negative electrode are reversed.

In one embodiment, the monitoring device 101 may provide a notification to the user terminal 105 when the input amounts of the negative and positive electrodes wound around the battery unit 115 are not appropriate. In one embodiment, the monitoring device 101 may provide a notification to the user terminal 105 when the negative and positive electrodes wound around the battery unit 115 are reversed.

According to the embodiment, the monitoring device 101 may further acquire information about not only the starting points of the electrodes, but also the areas of the electrodes, the thicknesses of the electrodes, and the winding paths of the electrodes using the artificial intelligence model 135. In addition, the monitoring device 101 may calculate the input amounts of the positive and negative electrodes included in the battery unit 115 based on information about the starting points of the electrodes and winding paths acquired through the artificial intelligence model 135. Lastly, the monitoring device 101 may determine whether the positive and negative electrodes of the battery unit 115 are reversed based on information about the starting points of the electrodes acquired through the artificial intelligence model 135.

## Claims

1. A monitoring device comprising:
a communication circuit;
a processor; and
a memory configured to store instructions, wherein, when executed by the processor, the instructions allow the monitoring device to:
acquire an image of a jelly roll including a positive electrode, a separator, and a negative electrode through the communication circuit;
detect starting points of the positive electrode and the negative electrode from the image; and
calculate input amounts of the positive electrode and the negative electrode included in the jelly roll based on the starting points.

2. The monitoring device of claim 1, wherein, when executed by the processor, the instructions allow the monitoring device to:
calculate a first winding length of the positive electrode extending from the starting point of the positive electrode;
calculate a second winding length of the negative electrode extending from the starting point of the negative electrode; and
calculate the input amounts of the positive electrode and the negative electrode based on the first winding length and the second winding length.

3. The monitoring device of claim 1, wherein, when executed by the processor, the instructions allow the monitoring device to:
identify areas between outlines extending from each of the starting points included in the image;
extract thickness information of the areas;
determine that the areas are the positive electrode or the negative electrode based on the thickness information;
determine that a starting point of the area determined to be the positive electrode is the starting point of the positive electrode; and
determine that a starting point of the area determined to be the negative electrode is the starting point of the negative electrode.

4. The monitoring device of claim 3, wherein, when executed by the processor, the instructions allow the monitoring device to:
determine that an area having a relatively great average thickness among the areas is the negative electrode; and
determine that an area having a relatively small average thickness among the areas is the positive electrode.

5. The monitoring device of claim 1, wherein, when executed by the processor, the instructions allow the monitoring device to compare the starting point of the positive electrode with the starting point of the negative electrode and determine whether the positive electrode and the negative electrode are reversed.

6. The monitoring device of claim 1, wherein, when executed by the processor, the instructions allow the monitoring device to detect the starting points by inputting the image into a pre-learned artificial intelligence model to detect the starting points of the positive and negative electrodes based on reference images of reference jelly rolls.

7. A method of operating a monitoring device, comprising:
an operation of acquiring an image of a jelly roll including a positive electrode, a separator, and a negative electrode;
an operation of detecting starting points of the positive electrode and the negative electrode from the image; and
an operation of calculating input amounts of the positive electrode and the negative electrode included in the jelly roll based on the starting points.

8. The method of claim 7, wherein the calculating of the input amount includes:
an operation of calculating a first winding length of the positive electrode extending from the starting point of the positive electrode;
an operation of calculating a second winding length of the negative electrode extending from the starting point of the negative electrode; and
an operation of calculating the input amounts of the positive electrode and the negative electrode based on the first winding length and the second winding length.

9. The method of claim 7, wherein the calculating of the starting points of the positive and negative electrodes includes:
an operation of identifying areas between outlines extending from each of the starting points included in the image;
an operation of extracting thickness information of the areas;
an operation of determining that the areas are the positive electrode or the negative electrode based on the thickness information;
an operation of determining that a starting point of the area determined to be the positive electrode is the starting point of the positive electrode; and
an operation of determining that a starting point of the area determined to be the negative electrode is the starting point of the negative electrode.

10. The method of claim 9, wherein the operation of determining that the areas are the positive electrode or the negative electrode includes:
an operation of determining that an area having a relatively great average thickness among the areas is the negative electrode; and
an operation of determining that an area having a relatively small average thickness among the areas is the positive electrode.

11. The method of claim 7, further comprising comparing the starting point of the positive electrode with the starting point of the negative electrode and determining whether the positive electrode and the negative electrode are reversed.

12. The method of claim 7, wherein the detecting of the starting points includes an operation of detecting the starting points by inputting the image into a pre-learned artificial intelligence model to detect the starting points of the positive and negative electrodes based on reference images of reference jelly rolls.
